# EUROPEAN PATENT APPLICATION

(11) **EP 4 803 237 A1**
(43) Date of publication of application: **09.09.2026**
(21) Application number: 24885521.5
(22) Date of filing: 21.10.2024
(51) Int. Cl.: B23K 20/12

(54) **ROTARY MEMBER FOR FRICTION STIRRING, ROBOT-TYPE JOINING DEVICE, AND JOINT COMPONENT**

(30) Priority: 01.11.2023 WO PCT/JP2023/039467; 05.02.2024 JP 2024015457; 05.02.2024 JP 2024015458; 05.02.2024 JP 2024015459
(71) Applicant: Keihin Ramtech Co., Ltd., Yokohama-shi, Kanagawa 2220033 (JP)
(72) Inventor: SATO, Ippei, Yokohama-shi, Kanagawa 222-0033 (JP); NEZU, Toshiyuki, Yokohama-shi, Kanagawa 222-0033 (JP); TAKASEKI, Yoshiyuki, Yokohama-shi, Kanagawa 222-0033 (JP)
(74) Representative: Reichert & Lindner Partnerschaft Patentanwälte
(86) International application number: PCT/JP2024/037459
(87) International publication number: WO 2025/094748

(57) **Abstract**

Regarding friction stir welding, the present teaching aims to provide a rotating member for friction stirring capable of welding with a high strength and with occurrence of a welding defect being suppressed.

A rotating member for friction stirring is provided in a welding apparatus for performing friction stir welding of a welding object member, the rotating member for friction stirring being configured such that the rotating member for friction stirring is arranged on an output shaft of a driving mechanism included in the welding apparatus to be rotated by rotation outputted from the driving mechanism, so that a clearance exists between the output shaft and a pin portion to be inserted into the welding object member at a time of friction stirring, the clearance allowing the pin portion to vibrate relative to the output shaft.

## Description

### Technical Field

The present teaching relates to a rotating member for friction stirring, a robot-type welding apparatus, and a welded component, relating to friction stir welding (FSW).

### Background Art

In Patent Literature 1 (PTL 1), a stirring pin is arranged in a main body part such that the stirring pin, by receiving a rotation force from the main body part, can rotate and can move relative to the axial direction of a rotation shaft. Further provided is a first elastic member (such as a coiled spring) that biases the stirring pin toward the distal end relative to the axial direction of the rotation shaft. A shoulder is arranged in the main body part such that the shoulder can move in the axial direction of the rotation shaft, independently of the stirring pin, without receiving a rotation force from the main body part. Further provided is a second elastic member that biases the shoulder toward the distal end relative to the axial direction of the rotation shaft. Even if, while the stirring pin is thrust into a welding object member at a fixed level, the level of the welding object member changes, the first elastic member deforms in accordance with the change of the welding object member, so that the amount of insertion of the stirring pin is kept constant ([0041]). Since the effect of the first elastic member allows the stirring pin to be inserted into the welding object member up to a fixed depth, a plasticization region is formed at the fixed depth ([0071]). In the technique of PTL 1, as described above, the first elastic member biases the stirring pin toward the welding object member, to insert the stirring pin into the welding object member up to the fixed depth.

In Patent Literature 2 (PTL 2), a stirring pin and a shoulder constitute an assembly. In the assembly, the stirring pin and the shoulder can rotate relative to each other, and can integrally move in the axial direction of a rotation shaft. Further provided is a first elastic member (such as a coiled spring) that biases the assembly toward the distal end of the stirring pin relative to the axial direction of the rotation shaft. In the technique of PTL 2, too, thanks to the first elastic member, the amount of insertion of the stirring pin is kept constant, and a plasticization region is formed at a fixed depth ([0033], [0052]).

In Patent Literature 3 (PTL 3), a rotary tool has a main body part and a stirring member. The main body part includes a fixed portion attached and fixed to a welding apparatus, and a rotation shaft that transmits a rotation force from the welding apparatus. The stirring member, which has a stirring pin, is disposed such that the stirring member can rotate by receiving a rotation force from the rotation shaft, and is disposed in the main body part such that the stirring member can move relative to the axial direction of the rotation shaft. Further provided is an elastic member (coiled spring) that biases the stirring member toward the distal end in the axial direction of the rotation shaft. In the technique of PTL 3, too, thanks to the elastic member, the amount of insertion of the stirring pin is kept constant, and a plasticization region is formed at a fixed depth ([0035], [0051]).

In any of PTL 1 to PTL 3, by means of the elastic member (coiled spring), the stirring pin is biased toward the welding object member and pressed against the welding object member, with the amount of insertion of the stirring pin being kept constant, so that the plasticization region is formed at a fixed depth.

### Citation List

### Patent Literature

PTL 1: Japanese Patent Application Laid-Open No. 2023-069370
PTL 2: Japanese Patent Application Laid-Open No. 2023-069371
PTL 3: Japanese Patent Application Laid-Open No. 2023-069372

### Summary of Invention

### Technical Problem

In friction stir welding, it is desired that a rotating member for friction stirring, a robot-type welding apparatus, and a welded component be provided that are capable of welding with a high strength and with occurrence of a welding defect being suppressed.

The present teaching, which relates to friction stir welding, aims to provide a rotating member for friction stirring, a robot-type welding apparatus, and a welded component that are capable of welding with a high strength and with occurrence of a welding defect being suppressed.

### Solution to the Problem

As a result of the earnest investigation with the above taken into account, the inventors of the present teaching discovered the following.

Conventionally, in friction stir welding, a support structure for supporting a stirring pin has been designed with a concept in which the stability of the stirring pin, while performing friction stirring, is highly regarded. This has involved forcible application of an external force in order to make it possible to bias the stirring pin toward a welding object member so that the stirring pin can be pushed against and inserted into the welding object member in as stable a manner as possible. In PTL 1 to PTL 3, as with the above, the elastic member is provided for the purpose of keeping the amount of insertion of the stirring pin constant to form the plasticization region at a fixed depth. PTL 1 to PTL 3 belong to a range of the conventional design concept.

The inventors of the present teaching changed the viewpoint from the conventional design concept, to discover that welding with a high strength and with occurrence of a welding defect being suppressed can be obtained when a pin portion to be inserted into a welding object member is intentionally passively vibrated at a larger amplitude and/or a higher frequency than a base vibration by contact of the pin portion with the welding object member undergoing a plastic flow, and thus have accomplished the present teaching. This knowledge is quite different from the conventional friction stir welding described above. Thus, even those skilled in the art could not easily arrive at this knowledge based on the technique of the conventional friction stir welding. In the present teaching, the following configurations can be adopted.
(1) A rotating member for friction stirring provided on a welding apparatus configured to perform friction stir welding on a welding object member,
   the rotating member for friction stirring being configured such that,
   the rotating member for friction stirring is arranged on an output shaft of a driving mechanism included in the welding apparatus to be rotated by rotation outputted from the driving mechanism, so that a clearance exists between the output shaft and a pin portion to be inserted into the welding object member at a time of friction stirring, the clearance allowing the pin portion to vibrate relative to the output shaft, and due to the clearance, at a time of friction stirring, a vibration of the pin portion has a larger amplitude and/or a higher frequency than a vibration of the output shaft.

In the rotating member for friction stirring according to (1), the clearance that allows the pin portion to vibrate relative to the output shaft is disposed between the output shaft and the pin portion. The rotating member for friction stirring is configured such that due to the clearance, at a time of friction stirring, a vibration of the pin portion has a larger amplitude and/or a higher frequency than a vibration of the output shaft. The output shaft of the driving mechanism, at a time of friction stirring, vibrates along with rotation received from the driving mechanism. This vibration is also called a base vibration. The base vibration is one that unavoidably occurs in friction stirring. At a time of friction stirring, the vibration of the pin portion has a larger amplitude and/or a higher frequency than the base vibration. At a time of friction stirring, the pin portion rotates while moving so as to parry the plastically flowing welding object member within a range allowed by the clearance, instead of resisting the plastically flowing welding object member. This movement generates the vibration of the pin portion. That is, the vibration of the pin portion is caused by the clearance. The vibration of the pin portion is not a vibration caused by an output from a driving source other than the driving mechanism. The vibration of the pin portion is less likely to hinder the plastic flow of the welding object member. Moreover, the vibration of the pin portion is capable of synchronization with the plastic flow of the welding object member. Thus, the vibration of the pin portion can amplify the plastic flow of the welding object member. The vibration of the pin portion, therefore, allows welding to be performed with a high strength and with occurrence of a welding defect being suppressed. In addition, the tilt angle (advanced angle) of the rotating member for friction stirring and the output shaft may be zero degrees. Even when the tilt angle is zero degrees, it is possible to provide good friction stir welding. Since the above-described vibration of the pin portion can be obtained due to the clearance, a complicated main shaft mechanism is not necessary. Generation of excessive frictional heat can be suppressed. Generation of excessive friction applied to the pin portion can be suppressed. The vibration of the pin portion can suppress transmission of a vibration from the downstream side to the upstream side of the clearance in a power transmission path extending from the driving mechanism to the pin portion. A reduced load can be applied to the output shaft.

It may be acceptable that the rotating member for friction stirring has the clearance provided in the rotating member for friction stirring itself. The rotating member for friction stirring may be configured such that the rotating member for friction stirring is attached to the output shaft, so that the clearance exists between the rotating member for friction stirring and the output shaft. The rotating member for friction stirring may be configured such that the rotating member for friction stirring does not include the pin portion, but the pin portion is attached to the rotating member for friction stirring, to form the clearance between the rotating member for friction stirring and the pin portion. The welding apparatus is not particularly limited, and does not always have to be an apparatus dedicated to friction stir welding. Other examples of the welding apparatus include a machining center, a robot, a milling machine, a multitasking machine, a general-purpose machine, and a portable type apparatus having such a size that a user can hold it in hand and perform friction stir welding. Control conditions (such as the position, load, main shaft load, heat, pressing) for the welding apparatus, its accessory mechanism, and the like, are not particularly limited, either. Welding conditions (the feed speed, rotation speed, welding temperature, forward angle) are not particularly limited, either. A material of the welding object member is not particularly limited. The welding object member may be made of either a homogeneous material or a heterogeneous material. Although the clearance, in the embodiment described later, exists due to the presence of a key (a fitting key or a fixing key), this is a non-limiting example. A structure for forming the clearance is not particularly limited, and a conventionally known structure is adoptable. Instead of the key, a member such as a bolt, a pin, or a spherical body may be adoptable as a member for forming the clearance. Alternatively, the shape of the rotating member for friction stirring itself may be used to form the clearance. It may be acceptable that the rotating member for friction stirring can be divided into plural (for example, two) members such that adjacent ones of the members are fitted to each other, so that the clearance exists. The amplitude and frequency of the vibration are not particularly limited, but may be adjustable by changing the amount of the clearance or the weight of a member on the downstream side of the clearance in the power transmission path extending from the driving mechanism to the pin portion. For example, the change of the weight can be achieved by, for example, placing a weight. In the welding apparatus, the driving mechanism includes a rotating machine. The rotating machine may be, for example, a rotating electric machine or an internal combustion engine. The driving mechanism may include a transmission that changes the speed of rotation outputted from the rotating machine and outputs the changed speed. The transmission may be either a speed reducer or a speed increaser. In a case of the driving mechanism including the transmission, an output shaft of the transmission corresponds to the output shaft of the driving mechanism. In a case of the driving mechanism including no transmission, an output shaft of the rotating machine corresponds to the output shaft of the driving mechanism. In an embodiment, both a backlash and a margin within the driving mechanism do not correspond to the clearance. In an embodiment, the clearance is disposed downstream of an upstream edge of the output shaft of the driving mechanism in the power transmission path extending from the driving mechanism to the pin portion.

(2) The rotating member for friction stirring according to (1), wherein
the rotating member for friction stirring includes
a rotation shaft portion provided on the output shaft; and
a distal end portion configured to be rotated by rotation received from the rotation shaft portion, the distal end portion being positioned toward a distal end relative to the rotation shaft portion,
the distal end portion either
being configured to have the pin portion and a proximal end portion disposed on a proximal end of the pin portion, or
being configured to not have the pin portion but have a proximal end portion to which the pin portion is detachably attachable,
the clearance being disposed between the rotation shaft portion and the distal end portion to allow the pin portion to vibrate relative to the rotation shaft portion,
the rotating member for friction stirring being configured such that
due to the clearance, at a time of friction stirring, a vibration of the pin portion has a larger amplitude and/or a higher frequency than a vibration of the rotation shaft portion.

The rotating member for friction stirring, according to (2) has a clearance between the rotation shaft portion and the distal end portion. Due to the clearance, at a time of friction stirring, the vibration of the pin portion has a larger amplitude and/or a higher frequency than the vibration of the output shaft. This vibration is not a vibration caused by an output from a driving source other than the driving mechanism. This vibration is less likely to hinder the plastic flow of the welding object member. Moreover, this vibration can amplify the plastic flow of the welding object member. Accordingly, welding with a high strength and with occurrence of a welding defect suppressed can be obtained.

In a case where the pin portion and the proximal end portion are configured integrally, the pin portion and the proximal end portion can be distinguished from each other as follows: the pin portion is a portion to enter the welding object member while the proximal end portion is a portion disposed on the proximal end of the pin portion. In a case where the pin portion and the proximal end portion are separable such as when the pin portion is configured to be attachable to and detachable from the proximal end portion, it is possible to physically distinguish the pin portion and the proximal end portion from each other. For example, the pin portion corresponds to the tool, and the proximal end portion corresponds to the collet. In a case of the distal end portion having no pin portion, the distal end portion may be configured as the proximal end portion itself to which the pin portion is detachably attachable.

(3) The rotating member for friction stirring according to (2), wherein
the distal end portion has, on the proximal end of the pin portion, a surface contact portion at a height of contact with a surface of the welding object member, and
a ratio of a diameter of the surface contact portion to a diameter of the pin portion adjacent to the surface contact portion and closer to the distal end than the surface contact portion is 1.8 or less, and the distal end portion is configured either to have a shoulder of which a width is small enough to satisfy the ratio, or to have no shoulder.

The vibration imparted to the pin portion due to the clearance is, as described above, less likely to hinder the plastic flow of the welding object member, and can amplify the plastic flow of the welding object member. In the rotating member for friction stirring according to (3), there is the shoulder having a small width or there is no shoulder, and therefore an area over which the shoulder is in contact with the surface of the welding object member as if it covers the welding object member undergoing a plastic flow is reduced. A phenomenon in which the plastic flow is hindered by the shoulder does not easily occur. Consequently, the less likelihood of hindrance to the plastic flow and the capability of amplification of the plastic flow, which are advantageous effects exerted by the vibration of the pin portion, can be obtained more effectively. In addition, when the rotating shoulder has a small width or when the rotating shoulder is not provided, the amount of heat that the rotating shoulder generates in the welding object member is reduced, but it is possible to obtain an effective plastic flow thanks to the advantageous effects of the vibration of the pin portion. Consequently, it is possible to perform friction stir welding at a lower temperature. Friction stir welding at a low temperature can suppress an influence of the temperature on the welding object member. Accordingly, generation of a deformation or a stress due to heat can be suppressed, and thus mechanical properties of the welding object member may possibly be improved as compared to a welding object member having undergone the conventional friction stir welding. Furthermore, the lowering of the temperature at which the friction stir welding is performed can suppress the energy consumption. This also makes it possible that a material that is difficult to weld at a high temperature is adopted as the welding object member.

The above-mentioned ratio is, though not particularly limited, 1.8 or less in (3) above. The ratio is more preferably 1.5 or less, further preferably 1.3 or less, and especially preferably 1.1 or less. This is because occurrence of the phenomenon in which the plastic flow is hindered by the shoulder can be suppressed. When the ratio is 1.0, the rotating member for friction stirring has no shoulder. An aspect having no shoulder is one of preferred embodiments of the rotating member for friction stirring. The ratio may be less than 2.0, for example. In the conventional friction stir welding, the ratio is 2 or more, for example. The ratio may be 2 or more. Since the shoulder vibrates together with the pin portion, the advantageous effects of the less likelihood of hindrance to the plastic flow and the capability of amplification of the plastic flow can be obtained. Here, it may be acceptable that the shoulder is configured not to rotate together with the pin portion. Friction stir welding performed in an aspect having the shoulder not rotating with the pin portion is called Stationary Shoulder Friction Stir Welding (SSFSW). In SSFSW, a low heat input into a plastic flow portion (joint) is allowed, which can improve mechanical characteristics, a fine structure, and surface finishing of the plastic flow portion. As described above, the aspect in which the shoulder has a small width or the shoulder is not provided makes it possible to perform friction stir welding at a lower temperature, and therefore is suitably applicable to SSFSW. To be specific, in a case where the rotating member for friction stirring has a shoulder, the shoulder may be configured to rotate together with the pin portion, or may be configured not to rotate together with the pin portion. The rotating member for friction stirring or the welding apparatus may be equipped with a shoulder formed as a body separate from the rotating member for friction stirring, the shoulder being configured not to rotate together with the pin portion. The shoulder configured not to rotate together with the pin portion may be fixed to the rotating member for friction stirring or the welding apparatus in such a manner that the shoulder does not rotate at all, or may be configured as a rotatable body separate from the pin portion.

(4) The rotating member for friction stirring according to any one of (1) to (3), wherein
the rotating member for friction stirring is configured such that
a passive vibration is imparted to the pin portion within a range allowed by the clearance, the passive vibration being caused by contact of the pin portion with the welding object member undergoing a plastic flow.

In the rotating member for friction stirring according to (4), the pin portion is passively vibrated within a range allowed by the clearance, due to contact with the welding object member undergoing a plastic flow. At a time of friction stirring, the pin portion rotates while moving so as to parry the plastically flowing welding object member within a range allowed by the clearance, instead of resisting the plastically flowing welding object member. This movement passively generates the vibration of the pin portion. The vibration of the pin portion, therefore, is less likely to hinder the plastic flow of the welding object member. This vibration can amplify the plastic flow of the welding object member. Accordingly, welding with a high strength and with occurrence of a welding defect suppressed can be obtained.

(5) The rotating member for friction stirring according to any one of (1) to (4), wherein
the rotating member for friction stirring is configured such that
due to the clearance, a vibration of the pin portion is generated in at least one of an axial direction, a circumferential direction, and a radial direction of the pin portion.

The rotating member for friction stirring according to (5) can perform high strength welding while suppressing the occurrence of a welding defect thanks to the vibration of the pin portion in at least one direction.

If the clearance between the output shaft and the pin portion is provided in the axial direction, the pin portion is capable of vibrating in the axial direction. If the clearance is provided in the circumferential direction, the pin portion is capable of vibrating in the circumferential direction. If the clearance is provided in the radial direction, the pin portion is capable of vibrating in the radial direction. The clearance is provided in at least one of the axial direction, the circumferential direction, and the radial direction of the pin portion. Examples of the clearance provided between the output shaft and the pin portion include:
(A) a clearance in the axial direction only;
(B) a clearance in the circumferential direction only;
(C) a clearance in the radial direction only;
(D) a combination of a clearance in the axial direction and a clearance in the circumferential direction;
(E) a combination of a clearance in the axial direction and a clearance in the radial direction;
(F) a combination of a clearance in the circumferential direction and a clearance in the radial direction; and
(G) a combination of a clearance in the circumferential direction, a clearance in the axial direction, and a clearance in the radial direction.

In a case of (A), the pin portion is capable of vibrating at least in the axial direction.

In a case of (B), the pin portion is capable of vibrating at least in the circumferential direction.

In a case of (C), the pin portion is capable of vibrating at least in the radial direction.

In a case of (D), the pin portion is capable of vibrating at least in the axial direction and the circumferential direction.

In a case of (E), the pin portion is capable of vibrating at least in the axial direction and the radial direction.

In a case of (F), the pin portion is capable of vibrating at least in the circumferential direction and the radial direction.

In a case of (G), the pin portion is capable of vibrating in the axial direction, the circumferential direction, and the radial direction.

The description in this paragraph refers to a clearance provided between the output shaft and the pin portion, but for a case of a clearance provided between the rotation shaft portion and the distal end portion, this paragraph can be read with "output shaft" replaced with "rotation shaft portion." Although the amount of the clearance in any one of the directions is not particularly limited and varies depending on the size of the welding apparatus or the like, the amount is preferably 0.0001 mm to 1 mm, more preferably 0.001 mm to 0.8 mm, and further preferably 0.01 mm to 0.5 mm, for example. The axial direction is not always the up-down direction, but can be set depending on arrangement of the welding object member and the pin portion.

(6) The rotating member for friction stirring according to any one of (1) to (5), wherein
the rotating member for friction stirring is configured such that
within a range of the clearance, the pin portion is free or substantially free relative to the output shaft.

In the rotating member for friction stirring according to (6), the pin portion is free or substantially free within a range allowed by the clearance, and therefore the vibration of the pin portion is passively generated by contact of the pin portion with the welding object member undergoing a plastic flow, and moreover the vibration of the pin portion has a larger amplitude and/or a higher frequency than the base vibration. This vibration is less likely to hinder the plastic flow of the welding object member. Furthermore, this vibration can amplify the plastic flow of the welding object member. Thanks to this vibration, welding with a high strength and with occurrence of a welding defect suppressed can be obtained.

Being free means a state of not being under physical or mechanical restraint. Being substantially free means being free enough to give the vibration of the pin portion at a time of friction stirring a larger amplitude and/or a higher frequency than those of the vibration of the output shaft so that restraint of the distal end portion relative to the output shaft is permissible within a range of the freedom. The restraint is, for example, a friction between adjacent members of the output shaft and the pin portion or an external stress attributable to an elastic body or liquid, which will be described later.

(7) The rotating member for friction stirring according to any one of (1) to (6), wherein
the clearance is
a void, or substantially a void.

In the rotating member for friction stirring according to (7), the clearance is void or substantially void, and therefore the vibration of the pin portion is passively generated by contact of the pin portion with the welding object member undergoing a plastic flow, and moreover the vibration of the pin portion has a larger amplitude and/or a higher frequency than the base vibration. This vibration is less likely to hinder the plastic flow of the welding object member. Furthermore, this vibration can amplify the plastic flow of the welding object member. Thanks to this vibration, welding with a high strength and with occurrence of a welding defect suppressed can be obtained.

The void is a space between the output shaft and the pin portion. Being substantially void means being allowed to have liquid or an elastic body therein to such an extent that the vibration of the pin portion at a time of friction stirring can have a larger amplitude and/or a higher frequency than the vibration of the output shaft.

(8) A welding apparatus for performing friction stir welding of a welding object member, the welding apparatus including:
a driving mechanism including an output shaft, the driving mechanism being configured to rotate the output shaft; and
a pin portion configured to be rotated by rotation received from the driving mechanism, the pin portion being inserted into the welding object member at a time of friction stirring,
the pin portion being configured with
a clearance that exists between the output shaft and the pin portion, which allows the pin portion to vibrate relative to the output shaft, such that due to the clearance, at a time of friction stirring, a vibration of the pin portion has a larger amplitude and/or a higher frequency than a vibration of the output shaft.

In the welding apparatus according to (8), a clearance that allows the pin portion to vibrate relative to the output shaft is provided between the output shaft and the pin portion. The welding apparatus is configured such that due to the clearance, at a time of friction stirring, a vibration of the pin portion has a larger amplitude and/or a higher frequency than a vibration of the output shaft. The output shaft, at a time of friction stirring, vibrates along with rotation received from the driving mechanism. This vibration is the same as the base vibration mentioned above. At a time of friction stirring, the vibration of the pin portion has a larger amplitude and/or a higher frequency than the base vibration. This vibration is caused by the clearance. This vibration is not a vibration caused by an output from a driving source other than the driving mechanism. This vibration is less likely to hinder the plastic flow of the welding object member. Moreover, this vibration can amplify the plastic flow of the welding object member. Accordingly, welding with a high strength and with occurrence of a welding defect suppressed can be obtained.

(9) A welding method for performing friction stir welding of a welding object member by: rotating a pin portion through rotation outputted from a driving mechanism; and inserting the pin portion into the welding object member, wherein
at a time of friction stirring, the welding object member undergoes friction stirring while a passive vibration is imparted to the pin portion, the passive vibration being caused by contact of the pin portion with the welding object member undergoing a plastic flow, the passive vibration having a larger amplitude and/or a higher frequency than a base vibration that is transmitted from the driving mechanism to the pin portion as a result of rotation of the driving mechanism.

In the welding method according to (9), the vibration of the pin portion is passively generated by contact of the pin portion with the welding object member undergoing a plastic flow, and moreover the vibration of the pin portion has a larger amplitude and/or a higher frequency than the base vibration. This vibration is less likely to hinder the plastic flow of the welding object member. Furthermore, this vibration can amplify the plastic flow of the welding object member. Thanks to this vibration, welding with a high strength and with occurrence of a welding defect suppressed can be obtained.

(10) A welding method for performing friction stir welding of a welding object member by inserting a pin portion into the welding object member while rotating the pin portion through rotation outputted from a driving mechanism, wherein
during friction stirring of the welding object member, the driving mechanism is subjected to a feedback control such that an output of the driving mechanism is changed either in synchronization with a variation of rotation of the pin portion, or to follow a variation of rotation of the pin portion, the variation of the pin portion being passively generated by contact of the pin portion with the welding object member undergoing a plastic flow.

In the welding method according to (10), the vibration of the pin portion is controlled by the driving mechanism such that hindrance to the plastic flow of the welding object member by the vibration of the pin portion can be suppressed or prevented. This can make the plastic flow more liberated. Accordingly, welding with a high strength and with occurrence of a welding defect suppressed can be obtained.

The matters in (1) to (10) above and the matters described in the sections in (1) to (10) above can be applied and/or incorporated to (A1) to (A18) described later.

(A1) A rotating member for friction stirring provided in a welding apparatus configured to perform friction stir welding of a welding object member,
the rotating member for friction stirring being configured such that the rotating member for friction stirring is arranged on an output shaft of a driving mechanism included in the welding apparatus to be rotated by rotation outputted from the driving mechanism, so that a clearance exists between the output shaft and a pin portion to be inserted into the welding object member at a time of friction stirring, the clearance allowing the pin portion to vibrate relative to the output shaft.

According to (A1), similarly to (1), high strength welding can be performed while suppressing the occurrence of a welding defect.

(A2) The rotating member for friction stirring according to (A1), further comprising a fall-off prevention structure configured to prevent the pin portion from falling off the output shaft.

According to (A2), the falling-off of the pin portion can be suppressed, and friction stir welding can be performed more efficiently.

(A3) The rotating member for friction stirring according to (A1 or A2), including:
a rotation shaft portion provided on the output shaft; and
a distal end portion configured to be rotated by rotation received from the rotation shaft portion, the distal end portion being positioned toward a distal end relative to the rotation shaft portion,
the distal end portion either
being configured to have the pin portion and a proximal end portion disposed on a proximal end of the pin portion, or
being configured to not have the pin portion but have a proximal end portion to which the pin portion is detachably attachable,
the clearance being disposed between the rotation shaft portion and the distal end portion to allow the pin portion to vibrate relative to the rotation shaft portion,
the rotating member for friction stirring being configured such that
due to the clearance, at a time of friction stirring, a vibration of the pin portion has a larger amplitude and/or a higher frequency than a vibration of the rotation shaft portion.

(A4) In the rotating member for friction stirring according to A3, the pin portion has a surface contact portion at a height at which the pin portion makes contact with a surface of the welding object member,
a ratio of a diameter of the surface contact portion to a diameter of the pin portion is 1.8 or less, the pin portion being adjacent to the surface contact portion and closer to the distal end than the surface contact portion, and the pin portion is configured either to have a shoulder of which the width is small enough to satisfy the ratio, or to have no shoulder.

(A5) In the rotating member for friction stirring according to any one of A1 to A4,
the rotating member for friction stirring is configured such that a passive vibration is imparted to the pin portion within a range allowed by the clearance, the passive vibration being caused by contact of the pin portion with the welding object member undergoing a plastic flow.

(A6) In the rotating member for friction stirring according to any one of A1 to A5,
due to the clearance, a vibration of the pin portion is generated in at least one of an axial direction, a circumferential direction, and a radial direction of the pin portion.

(A7) In the rotating member for friction stirring according to any one of A1 to A6,
within a range of the clearance, the pin portion is free or substantially free relative to the output shaft.

(A8) In the rotating member for friction stirring according to any one of A1 to A7,
the clearance is a void, or substantially a void.

According to (A3) to (A8), excellent effects are obtained as in (2) to (7) above.

(A9) A robot-type welding apparatus configured to perform friction stir welding on a welding object member,
the robot-type welding apparatus including:
a robot arm having at least one joint;
an output shaft arranged on a distal end of the robot arm;
a driving mechanism configured to rotate the output shaft; and
the rotating member for friction stirring according to any one of A1 to A8 arranged on the output shaft.

(A10) A robot-type welding apparatus configured to perform friction stir welding on a welding object member,
the robot-type welding apparatus, including:
a robot arm having at least one joint;
an output shaft arranged on a distal end of the robot arm;
a driving mechanism configured to rotate the output shaft; and
a pin portion configured to be rotated by rotation received from the driving mechanism, the pin portion being inserted into the welding object member at a time of friction stirring,
wherein
the pin portion is
configured with a clearance that exists between the output shaft and the pin portion, which allows the pin portion to vibrate relative to the output shaft.

(A11) In the robot-type welding apparatus according to A10, the pin portion is configured such that due to the clearance, at a time of friction stirring, a vibration of the pin portion has a larger amplitude and/or a higher frequency than a vibration of the output shaft.

(A12) A robot-type welding apparatus configured to perform friction stir welding on a welding object member,
the robot-type welding apparatus, including:
a robot arm having at least one joint;
an output shaft arranged on a distal end of the robot arm;
a driving mechanism configured to rotate the output shaft;
a pin portion arranged on a distal end of the output shaft,
a control unit configured to control the driving mechanism to perform friction stir welding of the welding object member by inserting the pin portion into the welding object member while rotating the pin portion through rotation outputted from the driving mechanism; and
a detection unit configured to detect a rotation status of the pin portion,
wherein
the control unit is configured to perform a feedback control of the driving mechanism based on the rotation status of the pin portion detected by the detection unit during friction stirring of the welding object member, such that an output of the driving mechanism is changed either in synchronization with a variation of rotation of the pin portion, or to follow a variation of rotation of the pin portion, the variation of rotation of the pin portion being passively generated by contact of the pin portion with the welding object member undergoing a plastic flow.

According to (A9) to (A12), adaptation to weld lines having complex shapes, such as weld lines on curved surfaces, is easy, and high-strength welding can be achieved while suppressing the occurrence of welding defects.

(A13) In the robot-type welding apparatus of any one of A9 to A12,
the robot arm is a multi-joint robot arm having a plurality of joints.

According to (A13), since more diverse operations are possible, adaptation to weld lines having more complex shapes can be achieved while satisfying suppression of the occurrence of welding defects and achievement of high-strength welding.

(A14) In the robot-type welding apparatus according to any one of A9 to A13,
the robot arm has a position adjustment mechanism configured to adjust an insertion depth of the pin portion into the welding object member in a direction in which the welding object member and the pin portion face each other.

The position adjustment mechanism is configured to adjust the insertion depth of the pin portion independently of the joint motion of the robot arm. According to (A14), a more accurate welding is possible. It is possible to suppress the occurrence of welding defects and achieve high-strength welding.

(A15) A welded component manufactured by friction stir welding using the rotating member for friction stirring according to any one of A1 to A8.

(A16) The welded component according to A15, the welded component applied to any one of an automobile, a railway vehicle, an aircraft, a ship, and a rocket.

According to the rotating member for friction stirring, the occurrence of welding defects is suppressed, and high-strength welding is possible. Consequently, the welded member obtained can be suitably applied to a vehicle. In particular, the welded member may be suitably applied to form a vehicle body.

(A17) The welded component according to A15, such that the welded component is applied to any one of an electrode component, an air conditioning device, a water-cooled or air-cooled power control unit, a water-cooled or air-cooled battery case, a door panel, a shock absorber, a suspension link, a waveguide, an antenna, a motor cover, a brewing tank, a vacuum device component, a sputtering target material, and an embedded heater.

(A18) The welded component according to any one of A15 to A17, such that the welded component is
a component manufactured by performing friction stir welding on a plurality of plate materials having different thicknesses, or
a component manufactured by performing friction stir welding on heterogeneous materials.

According to the rotating member for friction stirring, the occurrence of welding defects is suppressed, and high-strength welding is possible. Therefore, high-quality friction stir welding can be performed on a plurality of plate materials having different thicknesses and on heterogeneous materials. The welded component obtained is manufactured through high-quality friction stir welding. Heterogeneous materials may be the following combinations. For example, the heterogeneous material may be a combination of different metals, a combination of a resin and a metal, a combination of a metal casting and a metal wrought material, or a combination of a ceramic and a metal. Further, of the heterogeneous materials, at least one of the materials may be the following material. For example, the material may be a copper-aluminum heterogeneous thin-film material, a Ti-based material, an iron-based material, a chromium-based material, and rare-metal bonding. The rare metal herein may or may not encompass Ag and Au.

Further, in the present teaching, the following configurations can be adopted. Note that the following configuration is inherently or implicitly encompassed by the present teaching, but is described below for confirmation.
(A16-1) The welded component according to A15 that is applied to a spacecraft, a special vehicle, a bicycle, a defense special vehicle, defense equipment, a linear motor, a linear motor car, and a drone. Examples of the aforementioned spacecraft include artificial satellites, space stations, manned spacecraft, space probes, space telescopes, space cargo ships, space shuttles, and interplanetary probes. Examples of the aforementioned special vehicle include a self-propelled construction machine such as a truck crane, a trailer-coupled vehicle, and the like. Examples of the aforementioned bicycles include a city bicycle, an electric assist bicycle, a sports bike, and a special bicycle for off-road use and competition. With the welded component according to (A15), since occurrence of welding defects is suppressed and high-strength welding is achieved, the welded component of (A15) may be suitably used in severe environments as indicated in (A16-1).
(A16-2) The welded component according to A15 that is applied to facilities, apparatuses, or equipment used in the following fields. Namely, the welded component is applied to fields of food and beverages, liquid crystal, electronics, semiconductors, energy, power generation, batteries, solar cells, infrastructure, architecture, construction, medical care, vacuum, materials, equipment, machinery, metal and resin molding, home appliances, communications, IT, and digital. With the welded component according to (A15), since occurrence of welding defects is suppressed and high-strength welding is achieved, the welded component according to (A15) may be suitably used in a broad range of fields including fields such as those indicated in (A16-2).
(A17-1) The welded component according to A15 that is applied to any one of the following or configured as any one of the following. Aluminum and aluminum alloy products, copper and copper alloy products, magnesium and magnesium alloy products, iron and iron alloy products, resin products, extruded materials, drawn materials, cast materials, forged materials, thermal spray and injection materials, molded materials, metal products, heterogeneous material welded products, thin film materials, bus bars, silver and silver alloy products, gold and gold alloy products, and titanium and titanium alloy products.
(A17-2) The welded component according to A15 that is applied to any one of the following. Chambers, vacuum chambers, backing plates, water-cooling plates, temperature control plates, heat sinks, nozzles, valves, susceptors, ion implanter equipment, mobile phones, smartphones, chargers, storage batteries, Wi-Fi devices, electrical appliances, household products, televisions, games, washing machines, refrigerators, clocks, digital watches, decorative members, accessories, tableware, kitchen knives, scissors, balls, glasses, bats, electronic devices, and cameras.
(A17-3) The welded component according to A15 that is applied to any one of the following. Inverter cases, frames, bodies, undercarriage members, doors, door panels, floor panels, ceiling panels, inner panels, outer panels, stack boxes, crank arms, waveguide tubes, antennas, motors, gears, mufflers, electrical components, oil pans, motor covers, honeycomb panels, double-skin panels, tailored materials, body panels, wing members, bridges, bridge girders, bridge structures, wheelchairs, turbines, blades, converters, battery pack housings, wheels, accelerators, brakes, drive shafts, bumpers, bumper beams, spoilers, crash boxes, saddles, crankcases, bonnet hoods, radomes, clad materials, battery coil materials, rollers, bearings, bearing members, beam guides, and heat shields.
(A17-4) The welded component according to A15 that is applied to any one of the following. Gas tanks, gas power generators, fuel tanks, brewing tanks, hydrogen tanks, gasoline tanks, nuclear containers, solvent tanks, sonar devices, thermal power generators, hydroelectric generators, wind power generators, nuclear power generators, ion implantation devices, film forming devices, etching devices, coating devices, agricultural machinery, construction machinery, machine tools, industrial machinery, pumps and compressors, textile machinery, office machinery, superconducting devices, neutron devices, and exposure devices.
(A17-5) The welded component according to A15 that is applied to any one of the following. Syringes, catheters, medical devices, mounting stands, jigs, blades, scaffolding, window sashes, exterior walls, interior walls, roofs, interior finishes, piping, chairs, tables, desks, beds, sofas, and cabinets.
(A17-6) The welded component according to A15 that is applied to any one of the following. Capacitors, dryers, fishing gear (reels), musical instruments, microwave ovens, air conditioners, fans, personal computers, forklifts, tractors, excavators, bulldozers, robot arms, flanges, crawler tracks, hydraulic cylinders, pressing machines, suspensions, pedals, handlebars, guardrails, pipelines, engine blocks, transmissions, pantographs, fences, handrails, landing gears, railway rails, signal devices, electronic display boards, level crossings, propeller shafts, ducts, ventilation fans, suitcases, attaché cases, stepladders, inductors, aluminum trays, bathtubs, support frames, cooling layers, distributors, synthesizers, onboard lead wires, robot arms, mechanical arms, housings, capsules, valves, detectors, and missiles.

In the present teaching, the following aspects may be adopted regarding "clearance". Note that the following aspect is inherently or implicitly encompassed by the present teaching, but is described below for confirmation.

In the embodiments described later and the description above, the clearance is (I) provided by using a member such as a key; however, the clearance may be (II) provided by a fitting shape, or (III) a combination of the forms in (I) and (II). In the following, between the output shaft and the pin portion, a member A on the output shaft side and a member B on the pin portion side are adjacent to each other, and a clearance is provided between the member A and the member B. Note that the members A and B are not particularly limited. Further, the configuration from the output shaft to the pin is not particularly limited, and the configuration may be the output shaft-the holder-the collet-the tool-the pin, the output shaft-the holder-the tool-the pin, or the output shaft-the collet-the tool-the pin. The tool and the pin may be integrated with each other. The collet and the holder may be integrated with each other. The following examples are applicable to any of these aspects.

### (I) Clearance provided by a coupling member such as a key.

In this case, the coupling member is provided between the members A and B. The members A and B may be positioned at any of the upstream side (e.g., the output shaft and the holder), the intermediate portion (e.g., the holder and the tool), or the downstream side (e.g., the tool and the pin). The members such as the holder, the collet, and the tool may be divided between the output shaft side and the pin portion side, and a coupling member may be provided between these members, so that a clearance exists. Further, a key is used as the coupling member in the embodiments described below and in the description above; however, a pin or a bolt may be used. The key is provided between a member on the inner diameter side and a member on the outer diameter side along an axial direction of the output shaft. That is, a key groove is formed in each of the members on the inner diameter side and the outer diameter side, and a key having a size smaller than the key groove is provided in the key grooves, so that a clearance can exist. The key is not particularly limited, and examples of the key include a parallel key having a quadrangular (rectangular or square) cross-sectional shape, a wedge key (triangular key) provided with a taper such that one side becomes thinner in a radial direction, a semi-circular key having a semi-circular cross section, a round key having a cylindrical cross-sectional shape, an oval key, a polygonal key having a pentagonal or higher polygonal shape, a diamond-shaped key, and other irregular keys (e.g., a T-shaped key and a fan-shaped key). The shape along the axial direction is not particularly limited, and examples include a straight-type key having a constant cross-sectional shape along the axial direction, a step-type key in which the size of the cross-sectional shape varies stepwise along the axial direction, and a taper-type key in which the size of the cross-sectional shape gradually varies along the axial direction. Further, instead of the key or in combination with the key, a spherical body may be used as a coupling member. A plurality of spherical bodies may be arranged in a form in which the spherical bodies are aligned in the key grooves (ball spline). The dimensional difference between the key and the key groove is provided in at least one of the radial direction, the circumferential direction, and the axial direction. This creates a clearance that allows for vibration of the pin portion in that direction. A pin or a bolt is provided so as to be inserted through both the member on the inner diameter side and the member on the outer diameter side along the radial direction of the output shaft. For example, a hole having a diameter larger than that of the pin or the bolt is formed in one of the members on the outer diameter side and the inner diameter side, and the pin or the bolt is erected along the radial direction of the output shaft so as to pass through the hole, so that a clearance may exist. The dimensional difference between the pin or bolt and the hole is provided in at least one of the radial direction, the circumferential direction, and the axial direction. This creates a clearance that allows for vibration of the pin portion in that direction.

### (II) Clearance provided by a fitting shape (spline)

In this case, the fitting may be positioned at any of the upstream side, the intermediate portion, and the downstream side, as in the case of the above (I). The members such as the holder, the collet, and the tool may be divided between the output shaft side and the pin portion side, and a fitting may be formed on these members, so that a clearance may exist. The spline may be provided over the entire circumferential direction or in a portion of the circumferential direction. The spline shape is not particularly limited, and examples include polygonal splines (polygonal grooves), round splines (round grooves), angular splines (V-grooves), sawtooth splines, involute splines, and involute serrations. The dimensional difference of these fittings is provided in at least one of the radial direction, the circumferential direction, or the axial direction. This creates a clearance that allows for vibration of the pin portion in that direction.

### (III) Clearance by a combination of the above (I) and (II)

A clearance may exist by a combination of the coupling member and the fitting. The clearance may exist by a combination of the upstream side, the intermediate portion, and the downstream side. Further, by a combination of these, a clearance may exist. The clearance may exist in a plurality of positions.

### Advantageous Effects of Invention

The present teaching can provide a rotating member for friction stirring, a robot-type welding apparatus, and a welded component that are capable of welding with a high strength and with occurrence of a welding defect suppressed.

### Brief Description of Drawings

**[****FIG. 1]** FIG. 1(a) is a cross-sectional view schematically showing a rotating member for friction stirring according to First Embodiment, and FIG. 1(b) is a cross-sectional view as taken along the line A-A.
**[****FIG. 2]** FIG. 2(a) is a cross-sectional view schematically showing a pin portion of the rotating member for friction stirring shown in FIG. 1(a), and therearound, and FIG. 2(b) is a cross-sectional view schematically showing a pin portion of a rotary tool according to a comparative example, and therearound.
**[FIG. 3]** FIG. 3(a) to FIG. 3(t) are cross-sectional views each schematically showing a rotating member for friction stirring according to each variation.
**[****FIG. 4]** FIG. 4(a) is a cross-sectional view schematically showing a rotating member for friction stirring according to Second Embodiment, and FIG. 4(b) is a perspective view schematically showing a rotating member for friction stirring according to its modification.
**[****FIG. 5]** FIG. 5(a) is a cross-sectional view schematically showing a rotating member for friction stirring according to Third Embodiment, and FIG. 5(b) is a perspective view schematically showing a rotating member for friction stirring according to its modification.
**[****FIG. 6]** FIG. 6(a) is a side view schematically showing a robot-type welding apparatus according to Fourth Embodiment, and FIG. 6(b) is a partially enlarged view thereof.

### Description of Embodiments

### <First Embodiment>

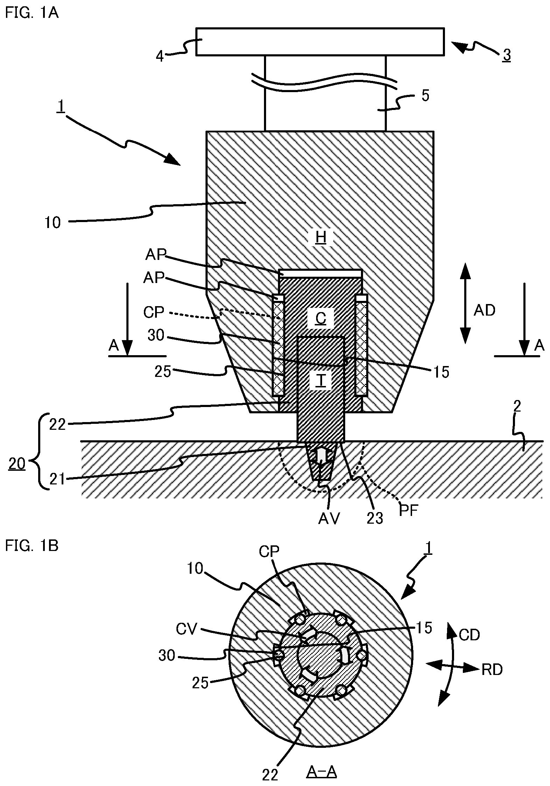

FIG. 1(a) is a cross-sectional view schematically showing a rotating member 1 for friction stirring according to First Embodiment. FIG. 1(b) is a cross-sectional view as taken along the line A-A of FIG. 1(a). In the figures, H, C, and T represent a holder, a collet, and a tool, respectively. AD, CD, and RD represent the axial direction, the circumferential direction, and the radial direction, respectively. The same interpretation applies to the other figures, though the reference signs mentioned above may be omitted in the other figures. In the drawings, if adjacent members of the rotating member 1 for friction stirring are given the same hatching pattern, it indicates that those members are in a fixed relationship. If different members are given different hatching patterns, it indicates that those members are in a non-fixed relationship. In the drawings, the same configurations are given the same reference signs.

The rotating member 1 for friction stirring is provided in a welding apparatus 3. The welding apparatus 3 is an apparatus for performing friction stir welding of a welding object member 2. The welding apparatus 3 has a driving mechanism 4. The rotating member 1 for friction stirring is detachably attached to an output shaft 5 of the driving mechanism 4. The rotating member 1 for friction stirring rotates with the output shaft 5 so that the rotating member 1 for friction stirring does not displace relative to the output shaft 5.

The rotating member 1 for friction stirring includes a rotation shaft portion 10, which is made of a metal, and a distal end portion 20, which is made of a metal. The rotation shaft portion 10 corresponds to the holder H. The rotation shaft portion 10 has a substantially columnar shape extending in the axial direction AD. The rotation shaft portion 10 is, at the upper surface side of the rotation shaft portion 10, fixed to the output shaft 5. The rotation shaft portion 10 has, at a lower surface of the rotation shaft portion 10, a bottomed hole for receiving the distal end portion 20. The bottomed hole opens downward. Disposed in the bottomed hole is the distal end portion 20.

The distal end portion 20 has a pin portion 21 and a proximal end portion 22, which is disposed on the proximal end of the pin portion 21. The pin portion 21 corresponds to the tool T. The proximal end portion 22 corresponds to the collet C. The proximal end portion 22 has a substantially columnar shape extending in the axial direction AD. The proximal end portion 22 has, in a lower surface of the proximal end portion 22, a bottomed hole for receiving the pin portion 21. The bottomed hole opens downward. Disposed in the bottomed hole is the pin portion 21. The pin portion 21 is fixed to the proximal end portion 22 so as not to displace relative to the proximal end portion 22. At a time of friction stirring, the distal end of the pin portion 21 is inserted into the welding object member 2, as shown in FIG. 1(a). In the figures, PF schematically represents a plastic flow portion of the welding object member 2 at a time of friction stirring.

The distal end portion 20 has, on its outer circumferential surface, plural grooves 25 arranged at intervals in the circumferential direction CD, as shown in FIG. 1(b). The grooves 25 are formed so as to extend in the axial direction AD, as shown in FIG. 1(a). Provided in each of the grooves 25 is a rod-shaped fitting key 30, which is made of a metal. An inner portion of the fitting key 30 in the radial direction RD comes into the groove 25. An outer portion of the fitting key 30 in the radial direction RD is exposed to the outside of the groove 25 in the radial direction RD. The rotation shaft portion 10 has, on its inner circumferential surface, grooves 15 arranged at positions corresponding to where the respective fitting keys 30 are exposed. The length of the groove 15 in the circumferential direction CD is larger than the length of the fitting key 30 in the circumferential direction CD. Consequently, a clearance CP in the circumferential direction CD is present in the groove 15. The clearance CP is disposed between the rotation shaft portion 10 and the distal end portion 20. The rotation shaft portion 10 is fixed to the output shaft 5, and the distal end portion 20 includes the pin portion 21. Thus, the clearance CP is disposed between the output shaft 5 and the pin portion 21. The clearance CP is void, or substantially void. Within a range allowed by the clearance CP, the pin portion 21 is free or substantially free relative to the output shaft 5. The distal end portion 20 is configured such that due to the clearance CP, a vibration CV in the circumferential direction CD is produced relative to the rotation shaft portion 10 at a time of friction stirring, as shown in FIG. 1(b).

The fitting keys 30...30 function as keys to transmit the rotational power from the driving mechanism to the collet C through the rotation shaft portion 10.

Further in the rotating member 1 for friction stirring, a clearance AP in the axial direction AD is present between the rotation shaft portion 10 and the distal end portion 20. In other words, the clearance AP is disposed between the output shaft 5 and the pin portion 21. The clearance AP is void, or substantially void. Within a range allowed by the clearance AP, the pin portion 21 is free or substantially free relative to the output shaft 5. The pin portion 21 is configured such that due to the clearance AP, a vibration AV in the axial direction AD is produced against the output shaft 5 at a time of friction stirring, as shown in FIG. 1(a).

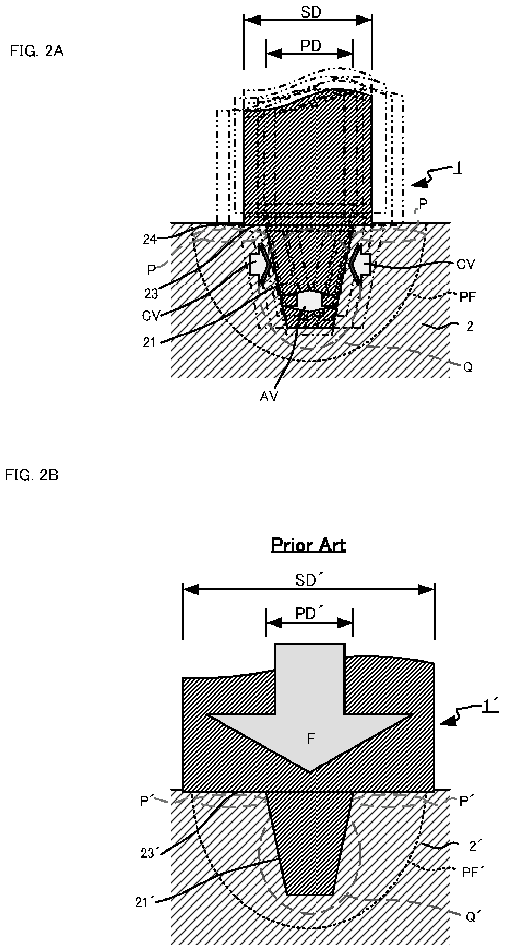

FIG. 2(a) is a cross-sectional view schematically showing the pin portion 21 of the rotating member 1 for friction stirring shown in FIG. 1(a), and therearound.

The vibrations AV, CV of the pin portion 21 have a larger amplitude and/or a higher frequency than those of the output shaft 5 (see FIG. 1(a)). In FIG. 2(a), the alternate long and two short dashes lines indicate the pin portion 21 while the vibrations AV, CV are occurring in the plastic flow portion PF.

A region Q is a region in the welding object member 2, within a range covered by the vibrations AV, CV of the pin portion 21. In the region Q, therefore, a plastic flow of the welding object member 2 is generated by rotation of the pin portion 21. The pin portion 21 is in contact with the welding object member 2 undergoing a plastic flow, within the range allowed by the clearances AP, CP. The pin portion 21 is free or substantially free within the range allowed by the clearances AP, CP. Accordingly, passive vibrations AV, CV are imparted to the pin portion 21. Since the vibrations AV, CV of the pin portion 21 are passive, they are not only less likely to hinder the plastic flow of the welding object member 2 but also capable of synchronization with and thus amplification of the plastic flow.

The pin portion 21 has a surface contact portion 24 at a height of contact with a surface of the welding object member 2. The ratio (diameter SD/diameter PD) of a diameter SD of the surface contact portion 24 to a diameter PD of the pin portion 21 located immediately below the surface contact portion 24 (the pin portion 21, which is adjacent to the surface contact portion 24, and is closer to the distal end than the surface contact portion 24) is 1.8 or less. Accordingly, the pin portion 21 has a shoulder 23 whose width is small enough to satisfy the ratio (diameter SD/diameter PD) ≤ 1.8.

A region P is a region near the surface of the welding object member 2. Since the shoulder 23 of the pin portion 21 has the small width, a phenomenon in which the plastic flow is hindered by the shoulder 23 is less likely to occur. Advantageous effects exerted by the vibrations AV, CV of the pin portion 21 (advantageous effects of the less likelihood of hindrance to the plastic flow, and the capability of amplification of the plastic flow) can be obtained more effectively. Since the width of the shoulder 23 is small, a reduced amount of heat is generated at a time of friction stirring, but it is possible to obtain an effective plastic flow thanks to the effects of the vibrations AV, CV of the pin portion 21. Consequently, it is possible to perform friction stir welding at a lower temperature. That is, since the width of the shoulder 23 is small, the plastic flow is less likely to be hindered by the shoulder 23, and in the region P, a more amplified plastic flow can be obtained.

FIG. 2(b) is a cross-sectional view schematically showing a pin portion of a rotary tool 1´ according to a comparative example (conventional technique), and therearound. The techniques disclosed in PTL 1 to PTL 3 correspond to this comparative example (conventional technique).

The rotary tool 1´ is, at a time of friction stirring, biased downward by an elastic member (not shown). In the figure, F represents a biasing force. Due to the biasing force F, the rotary tool 1´ is pushed against a welding object member 2´, so that the amount of insertion of the rotary tool 1´ into the welding object member 2´ is kept constant in a plastic flow portion PF'. In a pin portion 21´, the vibrations AV, CV as shown in FIG. 2(a) are not generated. A region Q' corresponds to the region Q in FIG. 2(a). In the region Q', the welding object member 2´ is undergoing a plastic flow at a location around the pin portion 21´, but the pin portion 21´, which is biased downward by the biasing force F, stays in the position. Consequently, the pin portion 21´, which remains stationary, may hinder the plastic flow of the welding object member 2´. In addition, the effect of amplifying the plastic flow of the welding object member 2´ cannot be obtained by the pin portion 21´ remaining stationary.

In the rotary tool 1´, the ratio (diameter SD'/PD') is not less than 2. The pin portion 21´ has a shoulder 23´ with a large width. In addition, by the biasing force F, the shoulder 23´ is biased downward, and pushed against the welding object member 2´. In a region P', therefore, the plastic flow is hindered by the shoulder 23´. Moreover, since a large amount of heat is generated at a time of friction stirring because of the large width of the shoulder 23´, it is difficult that the friction stir welding is performed at a low temperature.

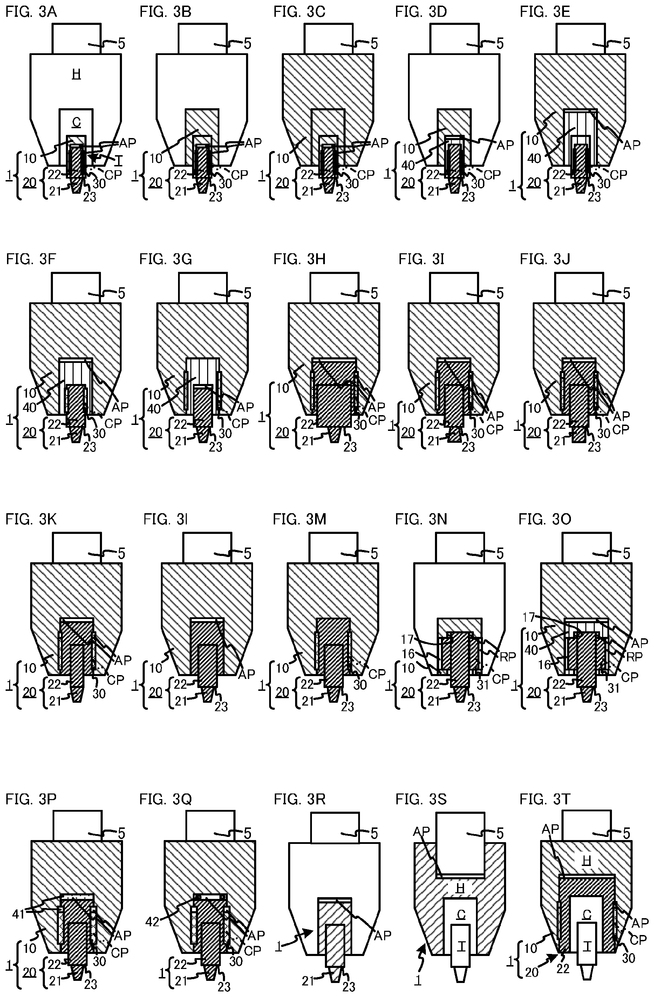

FIG. 3(a) to FIG. 3(t) are cross-sectional views each schematically showing a rotating member 1 for friction stirring according to each variation. In FIG. 3(a), FIG. 3(s), and FIG. 3(t), H, C, and T represent a holder, a collet, and a tool, respectively. The same as in FIG. 3(a), FIG. 3(s), and FIG. 3(t) applies to FIG. 3(b) to FIG. 3(r), too, though in FIG. 3(b) to FIG. 3(r), indication of H, C, and T is omitted for convenience.

### [FIG. 3(a)]

The rotating member 1 for friction stirring shown in FIG. 3(a), as a whole, corresponds to a tool T; a rotation shaft portion 10 corresponds to a part of the tool T; and a distal end portion 20 corresponds to a part of the tool T.

The distal end portion 20 includes a proximal end portion 22 and a pin portion 21 that are configured integrally. The distal end portion 20 is, by being inserted into a bottomed hole formed at a lower surface of the rotation shaft portion 10, attached to the rotation shaft portion 10. The lower surface of the rotation shaft portion 10 forms a shoulder 23. Disposed between the rotation shaft portion 10 and the distal end portion 20 are fitting keys 30 as shown in FIG. 1(a) and FIG. 1(b). As a result, the rotating member 1 for friction stirring has clearances AP, CP provided between the rotation shaft portion 10 and the distal end portion 20. The rotating member 1 for friction stirring is attached to a collet C. A holder H and the collet C are fixedly arranged on an output shaft 5, and thus the rotating member 1 for friction stirring is arranged on the output shaft 5 via the holder H and the collet C.

### [FIG. 3(b)]

A rotating member 1 for friction stirring shown in FIG. 3(b) corresponds to a collet C and a tool T; a rotation shaft portion 10 corresponds to the collet C and a part of the tool T; and a distal end portion 20 corresponds to a part of the tool T. The rotating member 1 for friction stirring is arranged on an output shaft 5 via a holder H. Except for this point, the aspect shown in FIG. 3(b) is the same as that in FIG. 3(a).

### [FIG. 3(c)]

A rotating member 1 for friction stirring shown in FIG. 3(c) corresponds to a holder H, a collet C, and a tool T; a rotation shaft portion 10 corresponds to the holder H, the collet C, and a part of the tool T; and a distal end portion 20 corresponds to a part of the tool T. The rotating member 1 for friction stirring is arranged on an output shaft 5. Except for this point, the aspect shown in FIG. 3(c) is the same as those in FIG. 3(a) and FIG. 3(b).

### [FIG. 3(d)]

A rotating member 1 for friction stirring shown in FIG. 3(d) includes a rotation shaft portion 10, an intermediate member 40, and a distal end portion 20. The rotating member 1 for friction stirring corresponds to a collet C and a tool T. The rotation shaft portion 10 corresponds to the collet C. The intermediate member 40 corresponds to a part of the tool T. The distal end portion 20 corresponds to a part of the tool T. The distal end portion 20 is, by being inserted into a bottomed hole formed at a lower surface of the intermediate member 40 having a substantially columnar shape, attached to the intermediate member 40. The lower surface of the intermediate member 40 forms a shoulder 23. Disposed between the intermediate member 40 and the distal end portion 20 are fitting keys 30. In an example shown in FIG. 3(d), due to the presence of the fitting keys 30, a clearance CP is provided, while no clearance AP is provided. The distal end portion 20 is capable of vibrating in the circumferential direction CD (see FIG. 1) relative to the intermediate member 40. The intermediate member 40 is, by being inserted into a bottomed hole formed at a lower surface of the rotation shaft portion 10, attached to the rotation shaft portion 10. As a result, a clearance AP is provided between the rotation shaft portion 10 and the intermediate member 40. The intermediate member 40 is capable of vibrating in the axial direction AD (see FIG. 1) relative to the rotation shaft portion 10. The clearances AP, CP disposed between the rotation shaft portion 10 and the distal end portion 20 may not always have to be defined by the rotation shaft portion 10 and the distal end portion 20. It may be possible that the intermediate member 40 is interposed between the rotation shaft portion 10 and the distal end portion 20, the intermediate member 40 being capable of displacing relative to each of the rotation shaft portion 10 and the distal end portion 20 individually. Accordingly, the rotating member 1 for friction stirring, as a whole, has the clearances AP, CP between the rotation shaft portion 10 and the distal end portion 20.

### [FIG. 3(e)]

A rotating member 1 for friction stirring shown in FIG. 3(e), like in FIG. 3(d), includes a rotation shaft portion 10, an intermediate member 40, and a distal end portion 20. The rotating member 1 for friction stirring corresponds to a holder H, a collet C, and a tool T. The rotation shaft portion 10 corresponds to the holder H. The intermediate member 40 corresponds to the collet C and a part of the tool T. The distal end portion 20 corresponds to a part of the tool T. The aspect shown in FIG. 3(e) is different from that in FIG. 3(d), in terms of the position of a clearance AP.

### [FIG. 3(f)]

In an aspect shown in FIG. 3(f), a rotating member 1 for friction stirring corresponds to a holder H, a collet C, and a tool T. A rotation shaft portion 10 corresponds to the holder H. The intermediate member 40 corresponds to the collet C. A distal end portion 20 corresponds to the tool T. Disposed between the intermediate member 40 and the distal end portion 20 are fitting keys 30, by which a clearance CP is provided between the intermediate member 40 and the distal end portion 20. A clearance AP is provided between the rotation shaft portion 10 and the intermediate member 40.

### [FIG. 3(g)]

In an aspect shown in FIG. 3(g), unlike in FIG. 3(f), fitting keys 30 are disposed between a rotation shaft portion 10 and an intermediate member 40, and consequently a clearance CP is provided between the rotation shaft portion 10 and the intermediate member 40. A clearance AP is provided between the intermediate member 40 and a distal end portion 20.

### [FIG. 3(h)]

In an aspect shown in FIG. 3(h), the width of a shoulder 23 is larger than that in FIG. 1. The above-mentioned ratio is not less than 2. The shoulder 23 is unified with a pin portion 21, and therefore the same vibration as generated in the pin portion 21 is generated in the shoulder 23, too. Consequently, in spite of the large width of the shoulder 23, a plastic flow of a welding object member 2 is less likely to be hindered, and amplification of the plastic flow is allowed. In this point, the aspect shown in FIG. 3(h) is different from the comparative example shown in FIG. 2(b). Here, it should be noted that the shoulder 23 may be configured as a member separate from the pin portion 21 so as not to rotate together with the pin portion 21.

### [FIG. 3(i), FIG. 3(j)]

Aspects shown in FIG. 3(i) and FIG. 3(j) are different from that in FIG. 1, in terms of the shape of a distal end of a pin portion 21. In FIG. 1, the distal end of the pin portion 21 is in the shape of a tapered truncated cone (a truncated cone shape with its distal end thinner than its proximal end), whereas in FIG. 3(i), the distal end of the pin portion 21 is in the shape of an inverted truncated cone (a truncated cone shape with its distal end thicker than its proximal end). In FIG. 3(j), the distal end of the pin portion 21 has a columnar shape. In this manner, the shape of the distal end of the pin portion 21 is not particularly limited. Various shapes may be employed as the shape of the pin portion 21.

### [FIG. 3(k)]

In an aspect shown in FIG. 3(k), the above-mentioned ratio is 1.0, and a rotating member 1 for friction stirring has no shoulder. The rotating member 1 for friction stirring, which does not have a rotating shoulder, is capable of performing friction stir welding at a lower temperature.

### [FIG. 3(l), FIG. 3(m)]

In an aspect shown in FIG. 3(l), unlike in FIG. 1, a rotating member 1 for friction stirring has only a clearance AP in the axial direction AD (see FIG. 1). In an aspect shown in FIG. 3(m), a rotating member 1 for friction stirring has only a clearance CP in the circumferential direction CD (see FIG. 1). It may be acceptable that the rotating member 1 for friction stirring has a clearance in only any one of the axial direction AD, the circumferential direction CD, or the radial direction RD.

### [FIG. 3(n)]

In an aspect shown in FIG. 3(n), a rotating member 1 for friction stirring corresponds to a collet C and a tool T. A rotation shaft portion 10 corresponds to the collet C. A distal end portion 20 corresponds to the tool T. The distal end portion 20 has a pin portion 21 and a proximal end portion 22 that are configured integrally with each other. The distal end portion 20 is attached to the rotation shaft portion 10 by being loosely fitted to a large-diameter bottomed hole 17 formed at a lower surface of the rotation shaft portion 10. The large-diameter bottomed hole 17 has a diameter larger than the diameter of the proximal end portion 22, which results in a clearance RP in the radial direction RD (see FIG. 1) appearing around the proximal end portion 22. Fixed to an outer surface of the proximal end portion 22 is a fixing key 31. The rotation shaft portion 10 has a side through hole 16 disposed at a position corresponding to the fixing key 31. The presence of the side through hole 16 makes a clearance CP as well as the clearance RP. Thus, there are the clearance CP and the clearance RP between the distal end portion 20 and the rotation shaft portion 10. The distal end portion 20 is capable of vibrating in the circumferential direction CD and in the radial direction RD relative to the rotation shaft portion 10.

### [FIG. 3(o)]

In an aspect shown in FIG. 3(o), a rotating member 1 for friction stirring includes a rotation shaft portion 10, an intermediate member 40, and a distal end portion 20. The rotating member 1 for friction stirring corresponds to a holder H, a collet C, and a tool T. The rotation shaft portion 10 corresponds to the holder H. The intermediate member 40 corresponds to the collet C. The distal end portion 20 corresponds to the tool T. The distal end portion 20 has a pin portion 21 and a proximal end portion 22 that are configured integrally with each other. The distal end portion 20 is attached to the intermediate member 40 by being loosely fitted to a large-diameter bottomed hole 17 formed at a lower surface of the intermediate member 40. The large-diameter bottomed hole 17 has a diameter larger than the diameter of the proximal end portion 22, which results in a clearance RP in the radial direction RD (see FIG. 1) appearing around the proximal end portion 22. Fixed to an outer surface of the proximal end portion 22 is a fixing key 31. The intermediate member 40 has a side through hole 16 disposed at a position corresponding to the fixing key 31. The presence of the side through hole 16 makes a clearance CP as well as the clearance RP. Thus, there are the clearance CP and the clearance RP between the distal end portion 20 and the intermediate member 40. The distal end portion 20 is capable of vibrating in the circumferential direction CD and in the radial direction RD relative to the intermediate member 40. The intermediate member 40 is attached to the rotation shaft portion 10 by being inserted into a bottomed hole formed at a lower surface of the rotation shaft portion 10. As a result, a clearance AP is provided between the rotation shaft portion 10 and the intermediate member 40. The intermediate member 40 is capable of vibrating in the axial direction AD (see FIG. 1) relative to the rotation shaft portion 10. As thus described above, in the rotating member 1 for friction stirring, there are the clearances AP, CP, RP between the rotation shaft portion 10 and the distal end portion 20. Accordingly, the distal end portion 20 is capable of vibrating relative to the rotation shaft portion 10 in all of the axial direction AD, the circumferential direction CD, and the radial direction RD.

### [FIG. 3(p)]

An aspect shown in FIG. 3(p) is different from the aspect shown in FIG. 1, in that clearances AP, CP are not void but the clearances AP, CP are filled with liquid 41 (for example, a lubricant). A rotating member 1 for friction stirring of this type is also capable of providing a vibration of a pin portion 21 like the one described with FIG. 2(a), and thus is obviously different from the aspect shown in FIG. 2(b). That is, the clearances AP, CP are substantially void. A distal end portion 20 is substantially free within a range allowed by the clearances AP, CP.

### [FIG. 3(q)]

An aspect shown in FIG. 3(q) is different from the aspect shown in FIG. 1, in that an elastic body 42 (for example, an O-ring) is disposed in a clearance AP between a rotation shaft portion 10 and a distal end portion 20. A rotating member 1 for friction stirring of this type is also capable of providing a vibration of a pin portion 21 like the one described with FIG. 2(a), and thus is obviously different from the aspect shown in FIG. 2(b). That is, the clearances AP, CP are substantially void. A distal end portion 20 is substantially free within a range allowed by the clearances AP, CP.

Illustrated in each of the foregoing examples is the case where the rotating member 1 for friction stirring includes the rotation shaft portion 10 and the distal end portion 20 with the clearance disposed between the rotation shaft portion 10 and the distal end portion 20, and the distal end portion 20 includes the pin portion 21. The rotating member 1 for friction stirring, however, is not limited to the foregoing examples, but may adopt the following aspects, for example.

### [FIG. 3(r)]

In an aspect shown in FIG. 3(r), a rotating member 1 for friction stirring corresponds to a collet C and a tool T. The rotating member 1 for friction stirring, which as a whole is configured integrally, includes a pin portion 21 and a shoulder 23. The rotating member 1 for friction stirring is configured such that the rotating member 1 for friction stirring is attached to the holder H, so that a clearance AP exists between the rotating member 1 for friction stirring and the holder H. Due to the presence of the clearance AP, the rotating member 1 for friction stirring, including the pin portion 21, vibrates in the axial direction AD relative to an output shaft 5 at a time of friction stirring.

### [FIG. 3(s)]

In an aspect shown in FIG. 3(s), a rotating member 1 for friction stirring corresponds to a holder H. The rotating member 1 for friction stirring has, in its lower surface, a bottomed hole in which a collet C and a tool T are inserted. As a result of the collet C and the tool T being inserted into the bottomed hole, the collet C and the tool T are detachably disposed in the rotating member 1 for friction stirring. The rotating member 1 for friction stirring includes no pin portion. A pin portion is included in the tool T. The rotating member 1 for friction stirring has, in its upper surface, a bottomed hole for receiving an output shaft 5. As a result of the output shaft 5 being inserted into the bottomed hole, the rotating member 1 for friction stirring is attached to the output shaft 5. The rotating member 1 for friction stirring is configured such that the rotating member 1 for friction stirring is attached to the output shaft 5, so that a clearance AP exists between the output shaft 5 and the rotating member 1 for friction stirring. Consequently, at a time of friction stirring, the clearance AP exists between the output shaft 5 and the pin portion of the tool T. The clearance AP allows the pin portion to vibrate relative to the output shaft 5.

### [FIG. 3(t)]

In an aspect shown in FIG. 3(t), a rotating member 1 for friction stirring includes a rotation shaft portion 10 and a distal end portion 20. The rotating member 1 for friction stirring corresponds to a holder H. The rotation shaft portion 10, which is an upper portion of the holder H, is attached to an output shaft 5. The distal end portion 20, which is a lower portion of the holder H, is configured to be rotated by rotation received from the rotation shaft portion 10, and is positioned toward a distal end relative to the rotation shaft portion 10. The distal end portion 20 is configured such that a collet C and a tool T are detachably attachable thereto. To be specific, the distal end portion 20, though not having a pin portion, has a proximal end portion 22 to which a pin portion is detachably attachable. Clearances AP, CP are disposed between the rotation shaft portion 10 and the distal end portion 20 to allow the pin portion to vibrate relative to the rotation shaft portion 10.

The rotating member 1 for friction stirring is not limited to the foregoing examples. It is just required that the rotating member 1 for friction stirring be configured such that the rotating member 1 for friction stirring is attached to the output shaft 5 so that a clearance exists between the output shaft 5 and the pin portion 21. It is not always necessary that the rotating member 1 for friction stirring can be divided into components, namely, a holder H, a collet C, and a tool T.

### <Welding Apparatus>

A welding apparatus according to First Embodiment is the welding apparatus 3 shown in FIG. 1(a) and FIG. 1(b), including the rotating member 1 for friction stirring. The welding apparatus 3 includes the driving mechanism 4 having the output shaft 5, and the pin portion 21. The pin portion 21 is provided such that there are the clearances AP, CP between the output shaft 5 and the pin portion 21, the clearances AP, CP allowing the vibrations AV, CV of the pin portion 21 relative to the output shaft 5. In the welding apparatus 3, due to the clearances AP, CP, the vibrations AV, CV of the pin portion 21 at a time of friction stirring have a larger amplitude and/or a higher frequency than a vibration (base vibration) of the output shaft 5. Although the welding apparatus 3 according to this embodiment includes the rotating member 1 for friction stirring having the clearances AP, CP, the rotating member 1 for friction stirring may not always have to be provided, and the welding apparatus 3 is just required to have a clearance between the output shaft 5 and the pin portion 21.

### <Welding Method>

A welding method according to First Embodiment can be performed by the foregoing welding apparatus 3 shown in FIG. 1(a) and FIG. 1(b). In this welding method, the driving mechanism 4 outputs rotation, by which the pin portion 21 is rotated, and the pin portion 21 is inserted into the welding object member 2, so that the welding object member 2 undergoes friction stir welding. In this welding method, at a time of friction stirring, the welding object member 2 undergoes friction stirring while a passive vibration is imparted to the pin portion 21, the passive vibration being caused by contact of the pin portion 21 with the welding object member 2 undergoing a plastic flow, the passive vibration having a larger amplitude and/or a higher frequency than a base vibration that is transmitted from the driving mechanism 4 to the pin portion 21 as a result of rotation of the driving mechanism 4.

In a welding method according to another embodiment, the driving mechanism 4 outputs rotation, by which the pin portion 21 is rotated, and in this state the pin portion 21 is inserted into the welding object member 2, so that the welding object member 2 undergoes friction stir welding. In this welding method, the welding object member 2 is subjected to friction stirring while a feedback control of the driving mechanism 4 is performed such that an output of the driving mechanism 4 is changed in synchronization with or so as to follow a variation of rotation of the pin portion 21, the variation being passively generated by contact of the pin portion 21 with the welding object member 2 undergoing a plastic flow. The variation of rotation can be detected by a conventionally known rotation speed sensor such as a resolver or an encoder.

Here, the numerical values, the materials, the structures, the shapes, and the like shown in the foregoing embodiment are only illustrative, and different numerical values, materials, structures, shapes, and the like may be adopted as necessary. In the foregoing embodiment, the rotating member 1 for friction stirring is positioned upward, the welding object member 2 is positioned downward, and the rotating member 1 for friction stirring and the welding object member 2 face each other in the up-down direction. That is, the axial direction is coincident with the up-down direction. The axial direction, however, may not always have to be coincident with the up-down direction. The axial direction is not particularly limited, and may be the horizontal direction, for example. It may be possible that in a case where the axial direction is the up-down direction, the rotating member for friction stirring is positioned downward while the welding object member is positioned upward. The axial direction may not always have to be fixed. In a welding apparatus configured with the rotating member for friction stirring provided in the above-mentioned portable type apparatus, the axial direction may change during an operation.

### <Second Embodiment>

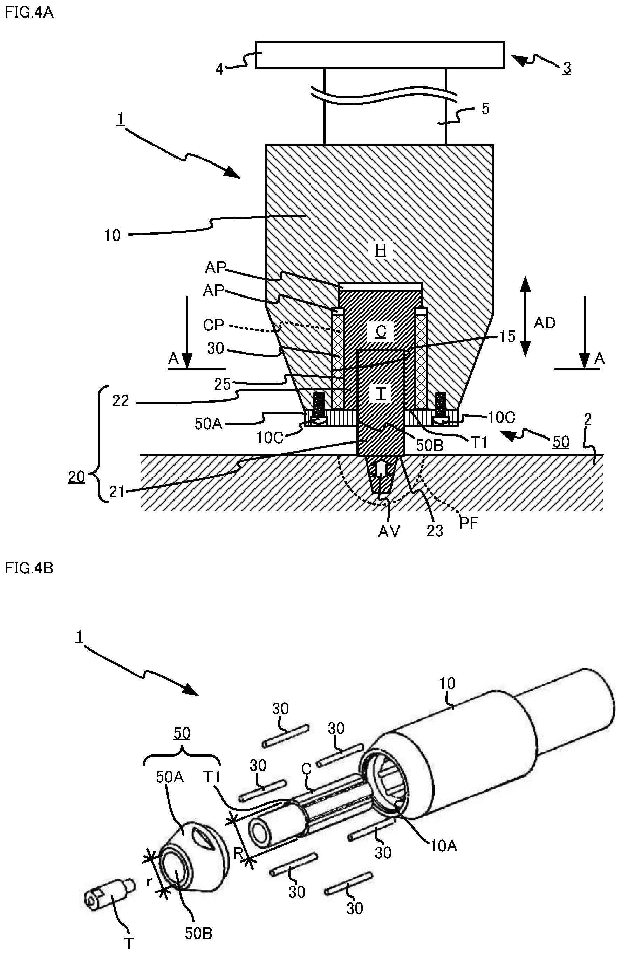

FIG. 4(a) is a cross-sectional view schematically showing a rotating member for friction stirring according to Second Embodiment. In Second Embodiment, unless otherwise specified, configurations corresponding to those in First Embodiment are denoted by the same reference numerals as in First Embodiment, and descriptions thereof are omitted.

The rotating member 1 for friction stirring according to Second Embodiment has a fall-off prevention structure 50 configured to prevent the pin portion 21 from falling off the output shaft 5. The fall-off prevention structure 50 is configured so that the tool T including the pin portion 21 does not fall off from the rotation shaft portion 10 together with the collet C. The fall-off prevention structure 50 includes a fall-off preventing member 50A with a pin portion insertion hole 50B formed therein, a fall-off preventing member mounting member 10C, and a step T1 described later. The fall-off preventing member 50A has a shape of a flat plate. The fall-off preventing member 50A is fixed to the rotation shaft portion 10 by the fall-off preventing member mounting member 10C. The pin portion insertion hole 50B is at least smaller than the maximum diameter of the collet C and has a size that allows the pin portion 21 to be exposed to the outside. The fall-off prevention structure 50 is configured to suppress falling-off of the tool T by engagement of the stepped portion T1, which is formed by a difference in outer diameter between the collet C and the tool T, with the pin portion insertion hole 50B. That is, the fall-off prevention structure 50 ensures that the tool T is exposed to the outside through the pin portion insertion hole 50B, allowing the pin portion 21 to be positioned at an intended welding position of the welding object members 2 (e.g., an intended welding line position of a pair of abutted welding object members 2, 2), while also suppressing the tool T from falling out due to the provision of the clearance CP. Such falling-out of the tool T is mainly caused by gravity due to the own weight of the tool T, including the weight of the pin portion 21. In particular, when the tool T is configured to be detachable and replaceable, the problem of falling-out tends to become prominent. Further, from the perspective of welding quality, it is preferable that the clearance AP is provided to an extent that allows the tool T including the pin portion 21 to fall off from the rotation shaft portion 10 together with the collet C, rather than being provided between the pin portion 21 and the output shaft 5 with a tolerance to an extent that prevents the pin portion 21 from falling off; however, as the clearance AP increases, the risk of the tool T falling off increases.

Such a risk may potentially be reduced by filling the clearance AP portion with a flame-retardant hydraulic oil such as a water-glycol-based hydraulic oil, depending on the viscosity of the hydraulic oil; however, in this example, since the weight of the collet C and the tool T integrally coupled to each other is relatively heavy, the viscosity of the hydraulic oil alone is insufficient to support that weight. Further, in a case where the rotating member 1 for friction stirring is provided in a robot-type welding apparatus described later, centrifugal force and inertia force are applied to the rotating member 1 for friction stirring when the rotating member 1 for friction stirring is rotated, swung, and/or moved by a robot arm, thereby further increasing the possibility that the tool T falls off. However, the fall-off prevention structure 50 can suppress the fall-off of the tool T. The configuration of the fall-off prevention structure 50 is not limited to that of the present embodiment. The fall-off preventing member mounting member 10C is a screw, but is not limited to this. Further, while the fall-off preventing member 50A may have a cap shape with a screw groove formed on the inner circumference, the corresponding screw groove may be formed on the outer peripheral surface of the rotation shaft portion 10. Consequently, it is possible to fix the fall-off preventing member 50A to the rotation shaft portion 10 without using the fall-off preventing member mounting member 10C. This aspect is described in the following modification.

Further, since the clearance AP is provided as in the present teaching, there is an advantage that replacement of the tool T becomes easier. In particular, when a general user or an operator unfamiliar with handling replaces the tool T, the tool T can be held by hand and removed without the need for dedicated equipment for tool replacement, and can be easily replaced with a new tool.

### Modification of Second Embodiment

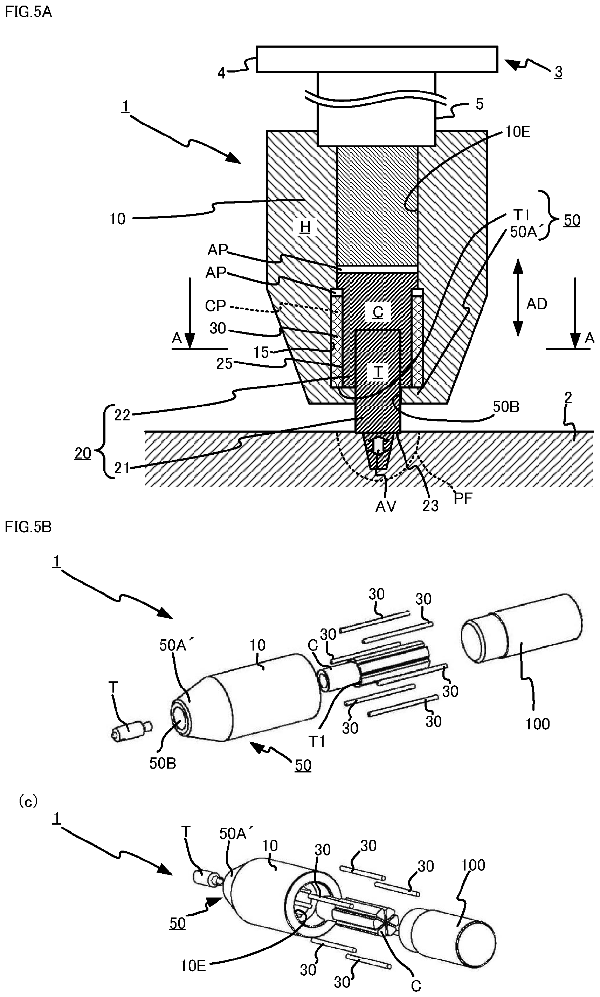

FIG. 4(b) is a perspective view schematically showing a rotating member 1 for friction stirring according to a modification of the Second Embodiment. In this modification, unless otherwise specified, configurations corresponding to those in the above embodiment are denoted by the same reference numerals as in the above embodiment, and descriptions thereof are omitted. In the rotating member 1 for friction stirring according to this modification, the collet C and the tool T, which are integrally formed, are inserted from a distal opening 10A of the rotation shaft portion 10 into a bottomed hole formed in the rotation shaft portion 10 together with the fitting key 30, whereby the collet C and the tool T are mounted within the distal opening 10A of the rotation shaft portion 10. The fall-off prevention structure 50 includes a fall-off preventing member 50A and a step T1. The fall-off preventing member 50A is configured such that a diameter r of the pin portion insertion hole 50B formed in the fall-off preventing member 50A and an outer dimension R of the collet C satisfy r < R. The distal end of the tool T is kept from being immersed into the rotation shaft portion 10 together with the collet C integrally formed with the tool T, and the distal end of the tool T is exposed to the outside from the pin portion insertion hole 50B. As described above, the fall-off preventing member 50A and the rotation shaft portion 10 are fixed to each other by their respective screw grooves, which can keep the fall-off preventing member 50A and the rotation shaft portion 10 from separating during friction stir welding. The structure for fixing the fall-off preventing member 50A to the rotation shaft portion 10 is not limited to this example. Further, the tool T is configured such that the outer diameter of the tool T is smaller than the diameter r of the pin portion insertion hole 50B. As a result, by grasping and rotating the tool T attached to the collet C, the tool T can be separated from the collet C and withdrawn through the pin portion insertion hole 50B of the fall-off preventing member 50A. It is also possible to attach other tool T to the collet C through the pin portion insertion hole 50B. Therefore, only the tool T can be replaced. In this embodiment, the tool T and the collet C can be separated; however, the tool T and the collet C may be integrally formed so as not to be separable. In this case, the fall-off preventing member 50A is removed from the rotation shaft portion 10, and the collet C and the tool T are replaced. The rotating member 1 for friction stirring shown in FIG. 4(a) and (b) has a distal-end insertion-type fall-off prevention structure 50 into which the collet C and the tool T are inserted from the distal end; however, the rotating member for friction stirring is not limited to these examples. The rotating member for friction stirring may have a proximal-end insertion-type fall-off prevention structure into which the collet C and the tool T are inserted from the proximal end, as shown in FIG. 5(a) to FIG. 5(c).

### Third Embodiment

FIG. 5(a) is a cross-sectional view schematically showing a rotating member 1 for friction stirring according to Third Embodiment. In Third Embodiment, unless otherwise specified, configurations corresponding to those in the above embodiment are denoted by the same reference numerals as in the above embodiment, and descriptions thereof are omitted. The rotating member 1 for friction stirring according to Third Embodiment includes a fall-off preventing unit 50A' integrally formed with the rotation shaft portion 10, instead of the fall-off preventing member 50A described above. The fall-off preventing unit 50A' includes a pin portion insertion hole 50B. A proximal hole 10E is formed at a proximal end of the rotation shaft portion 10. The tool T and the collet C integrally configured with each other are inserted from the proximal hole 10E together with the fitting key 30, and further, a closing member 100 is provided to close the proximal hole 10E from the proximal end. The closing member 100 and the rotation shaft portion 10 have corresponding screw grooves formed therein, and the closing member 100 is fixed to the rotation shaft portion 10 by those screw grooves. As a result, while ensuring the clearance AP, the fall-off of the tool T and the collet C can be suppressed, and constant exposure of the distal end of the tool T can be achieved. In this embodiment, the fall-off preventing structure 50 includes a fall-off preventing unit 50A', a step T1, and a closing member 100.

### Modification of Third Embodiment

FIG. 5(b) and (c) are perspective views schematically showing a rotating member for friction stirring according to a modification of Third Embodiment. In this modification, unless otherwise specified, configurations corresponding to those in the above embodiment are denoted by the same reference numerals as in the above embodiment, and descriptions thereof are omitted. In the rotating member 1 for friction stirring according to FIG. 5(b) and (c), similarly to the rotating member 1 for friction stirring according to FIG. 5(a), the tool T and the collet C integrally configured with each other are inserted into the proximal hole 10E from the proximal end, and the proximal hole 10E is closed by the closing member 100. The fixing structure of the closing member 100 is not limited to a screw structure. For example, any structure may be adopted, such as a press fit, or forming a retaining-screw insertion hole penetrating the outer periphery of the rotation shaft portion 10 and fixing the tool by a headless screw.

### Fourth Embodiment

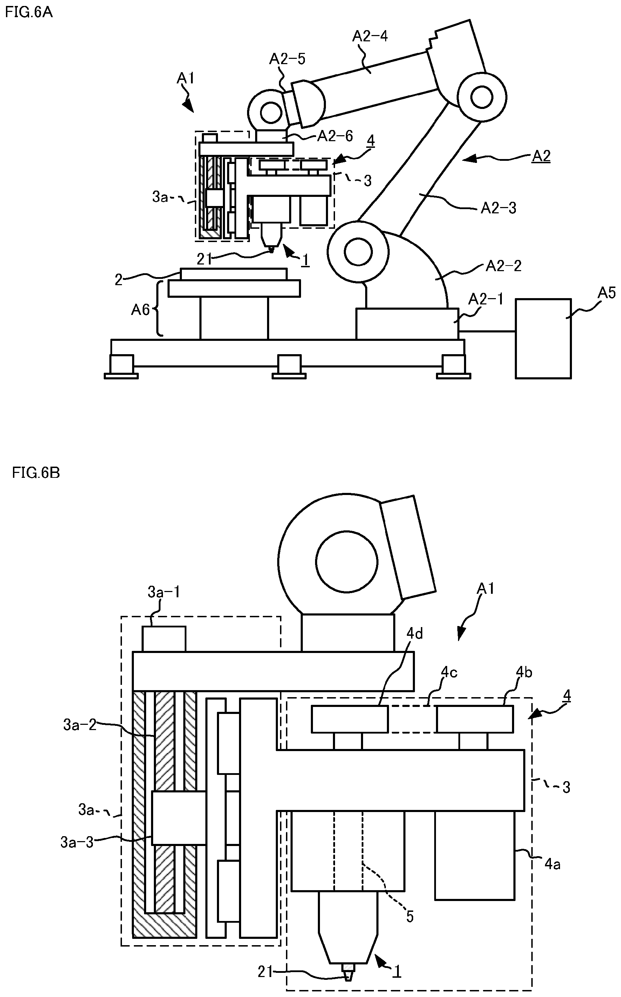

FIG. 6(a) is a side view schematically showing a robot-type welding apparatus A1 according to Fourth Embodiment. FIG. 6(b) is a partially enlarged view showing the vicinity of the rotating member 1 for friction stirring provided in a robot-type welding apparatus A1. The robot-type welding apparatus A1 includes a robot arm A2. The robot arm A2 in this embodiment is a multi-joint robot arm having a plurality of joints. However, the robot arm is not limited to this example, provided that the robot arm has at least one joint. The robot arm A2 includes a welding apparatus 3 arranged on the distal end of robot arm A2. The welding apparatus 3 includes an output shaft 5 arranged on the distal end of the robot arm A2 and a driving mechanism 4 configured to rotate the output shaft 5. The rotating member 1 for friction stirring is arranged on the distal end of the output shaft 5. The rotating member 1 for friction stirring according to each of the above embodiments can be adopted. In this embodiment, the rotating member 1 for friction stirring is separate from the output shaft 5, and the rotating member 1 for friction stirring is attached to the output shaft 5. However, the robot-type welding apparatus A1 is not limited to this example. The robot-type welding apparatus A1 does not need to include the rotating member 1 for friction stirring, as long as a clearance is provided between the output shaft 5 and the pin portion 21. The pin portion 21 is configured such that, due to the clearance, at a time of friction stirring, vibration of the pin portion 21 has a larger amplitude and/or a higher frequency than vibration of the output shaft 5. In the robot-type welding apparatus A1 including the rotating member 1 for friction stirring, the rotating member 1 for friction stirring is provided on the distal end of the output shaft 5, resulting in the pin portion 21 being provided on the distal end of the output shaft 5. A position adjustment mechanism 3a is provided between the robot arm A2 and the output shaft 5. The position adjustment mechanism 3a is configured to adjust the insertion depth of the pin portion 21 into the welding object member 2 in the direction in which the welding object member 2 placed on a stage A6 and the pin portion 21 face each other. In this embodiment, the welding object member 2 is placed on the stage A6 so that the pin portion 21 approaches from above in the vertical direction, and is fixed on the stage A6 by a fixing mechanism such as a jig (not shown); however, the form of fixing the welding object member 2 is not limited to this example. The direction in which the pin portion 21 approaches is not limited to a direction from vertically above and may be in other directions as well. The robot arm A2 according to this embodiment can freely move or operate the rotating member 1 for friction stirring in a three-dimensional space by its multi-joint structure and a servo motor (not shown). Robot arm A2 has a leg part A2-2, a forearm part A2-3, an upper arm part A2-4, and wrist parts A2-5 and A2-6 on the base part A2-1. The number of joints may be any number. A variety of operations are possible with an increase in the number of joints. In the robot arm A2, the position adjustment mechanism 3a and the welding apparatus 3 are connected in this order to the distal end of the wrist part A2-6. The position adjustment mechanism 3a includes a bidirectional position control motor 3a-1, a rotation shaft 3a-2 directly connected to the position control motor 3a-1, and a slider 3a-3 provided on the rotation shaft 3a-2. With rotation of the position control motor 3a-1, the rotation shaft 3a-2 rotates. The slider 3a-3 is configured to move along the rotation shaft 3a-2, with rotation of the rotation shaft 3a-2. When the position control motor 3a-1 rotates forward, the slider 3a-3 moves toward one end of the rotation shaft 3a-2. When the position control motor 3a-1 rotates in reverse, the slider 3a-3 moves toward the other end of the rotation shaft 3a-2. That is, the slider 3a-3 is reciprocable along the rotation shaft 3a-2. To the slider 3a-3, the welding apparatus 3 is provided, and the welding apparatus 3 is reciprocable along the rotation shaft 3a-2 with reciprocation of the slider 3a-3. With reciprocation of the welding apparatus 3, the insertion depth of the pin portion 21 into the welding object member 2 can be adjusted. The driving mechanism 4 includes a driving motor 4a, a first pulley 4b, a rotation transmission belt 4c, and a second pulley 4d. The driving mechanism 4 is configured such that the rotation force outputted from the driving motor 4a is transmitted to the rotating member 1 for friction stirring provided on the distal end of the output shaft 5, through the first pulley 4b, the rotation transmission belt 4c, the second pulley and the output shaft 5. Further, the robot-type welding apparatus A1 includes a control unit A5 (control device). The movement of the welding apparatus 3 by the robot arm A2 and the welding operation of the welding apparatus 3 are controlled by commands from the control unit A5. The control unit A5 includes a storage unit (not shown). The storage unit stores data of parameters related to movement of the welding apparatus 3 and the welding operation of the welding apparatus 3. Further, the robot-type welding apparatus A1 may include a detection unit (not shown) configured to detect the rotation status of the pin portion 21. The detection unit is not particularly limited provided that the detection unit is a sensor capable of detecting at least one parameter related to the rotation status of the pin portion 21. Examples of such a parameter include a rotation speed, a rotation angle, a rotation torque, and the like. As a result, the feedback control described above may be performed.

### Reference Signs

- 1: rotating member for friction stirring
- 2: welding object member
- 3: welding apparatus
- 4: driving mechanism
- 5: output shaft (of driving mechanism
- 10: rotation shaft portion
- 15: groove
- 16: side through hole
- 17: large-diameter bottomed hole
- 20: distal end portion
- 21: pin portion
- 22: proximal end portion
- 23: shoulder
- 24: surface contact portion
- 25: groove
- 30: fitting key
- 31: fixing key
- 40: intermediate member
- 41: liquid
- 42: elastic body

## Claims

1. A rotating member for friction stirring provided in a welding apparatus configured to perform friction stir welding on a welding object member,
the rotating member for friction stirring being configured such that,
the rotating member for friction stirring is arranged on an output shaft of a driving mechanism included in the welding apparatus to be rotated by rotation outputted from the driving mechanism, so that a clearance exists between the output shaft and a pin portion to be inserted into the welding object member at a time of friction stirring, the clearance allowing the pin portion to vibrate relative to the output shaft.

2. The rotating member for friction stirring according to claim 1, further comprising a fall-off prevention structure configured to prevent the pin portion from falling off the output shaft.

3. The rotating member for friction stirring according to claim 1 or 2, comprising:
a rotation shaft portion provided on the output shaft; and
a distal end portion configured to be rotated by rotation received from the rotation shaft portion, the distal end portion being positioned toward a distal end relative to the rotation shaft portion,
the distal end portion either
being configured to have the pin portion and a proximal end portion disposed on a proximal end of the pin portion, or
being configured to not have the pin portion but have a proximal end portion to which the pin portion is detachably attachable,
the clearance being disposed between the rotation shaft portion and the distal end portion to allow the pin portion to vibrate relative to the rotation shaft portion,
the rotating member for friction stirring being configured such that,
due to the clearance, at a time of friction stirring, a vibration of the pin portion has a larger amplitude and/or a higher frequency than a vibration of the rotation shaft portion.

4. The rotating member for friction stirring according to claim 3, wherein:
the pin portion has a surface contact portion at a height at which the surface contact portion makes contact with a surface of the welding object member; and
a ratio of a diameter of the surface contact portion to a diameter of the pin portion adjacent to the surface contact portion and closer to a distal end than the surface contact portion is 1.8 or less, and the pin portion is configured either to have a shoulder of which a width is small enough to satisfy the ratio, or to have no shoulder.

5. The rotating member for friction stirring according to any one of claims 1 to 4, wherein
the rotating member for friction stirring is configured such that a vibration of the pin portion is passively generated within a range of the clearance by contact of the pin portion with the welding object member undergoing a plastic flow.

6. The rotating member for friction stirring according to any one of claims 1 to 5, wherein
the rotating member for friction stirring is configured such that, due to the clearance, a vibration of the pin portion is generated in at least one of an axial direction, a circumferential direction, and a radial direction of the pin portion.

7. The rotating member for friction stirring according to any one of claims 1 to 6, wherein
the rotating member for friction stirring is configured such that, within a range of the clearance, the pin portion is free or substantially free relative to the output shaft.

8. The rotating member for friction stirring according to any one of claims 1 to 7, wherein
the clearance is a void, or substantially a void.

9. A robot-type welding apparatus configured to perform friction stir welding on a welding object member,
the robot-type welding apparatus comprising:
a robot arm having at least one joint;
an output shaft arranged on a distal end of the robot arm;
a driving mechanism configured to rotate the output shaft; and
the rotating member for friction stirring according to any one of claims 1 to 8, arranged on the output shaft.

10. A robot-type welding apparatus configured to perform friction stir welding on a welding object member,
the robot-type welding apparatus comprising:
a robot arm having at least one joint;
an output shaft arranged on a distal end of the robot arm;
a driving mechanism configured to rotate the output shaft; and
a pin portion configured to be rotated by rotation received from the driving mechanism, the pin portion being inserted into the welding object member at a time of friction stirring,
wherein
a clearance exists between the output shaft and the pin portion, the clearance allowing the pin portion to vibrate relative to the output shaft.

11. The robot-type welding apparatus according to claim 10, wherein
the pin portion is configured such that, due to the clearance, at a time of friction stirring, a vibration of the pin portion has a larger amplitude and/or a higher frequency than a vibration of the output shaft.

12. A robot-type welding apparatus configured to perform friction stir welding on a welding object member,
the robot-type welding apparatus comprising:
a robot arm having at least one joint;
an output shaft arranged on a distal end of the robot arm;
a driving mechanism configured to rotate the output shaft;
a pin portion arranged on a distal end of the output shaft;
a control unit configured to control the driving mechanism to perform friction stir welding on the welding object member by inserting the pin portion into the welding object member while rotating the pin portion through rotation outputted from the driving mechanism; and
a detection unit configured to detect a rotation status of the pin portion,
wherein
the control unit is configured to perform a feedback control of the driving mechanism based on the rotation status of the pin portion detected by the detection unit during friction stirring of the welding object member, such that an output of the driving mechanism is changed either in synchronization with a variation of rotation of the pin portion, or to follow a variation of rotation of the pin portion, the variation of rotation of the pin portion being passively generated by contact of the pin portion with the welding object member undergoing a plastic flow.

13. The robot-type welding apparatus according to any one of claims 9 to 12, wherein
the robot arm is a multi-joint robot arm having a plurality of joints.

14. The robot-type welding apparatus according to any one of claims 9 to 13, wherein
the robot arm has a position adjustment mechanism configured to adjust an insertion depth of the pin portion into the welding object member in a direction in which the welding object member and the pin portion face each other.

15. A welded component manufactured by friction stir welding using the rotating member for friction stirring according to any one of claims 1 to 8.

16. The welded component according to claim 15, wherein the welded component is applied to any one of an automobile, a railway vehicle, an aircraft, a ship, and a rocket.

17. The welded component according to claim 15, wherein the welded component is applied to any one of an electrode component, an air conditioning device, a water-cooled or air-cooled power control unit, a water-cooled or air-cooled battery case, a door panel, a shock absorber, a suspension link, a waveguide, an antenna, a motor cover, a brewing tank, a vacuum device component, a sputtering target material, and an embedded heater.

18. The welded component according to any one of claims 15 to 17, wherein the welded component is
a component manufactured by performing friction stir welding on a plurality of plate materials having different thicknesses, or
a component manufactured by performing friction stir welding on a plurality of members made of different materials.
